(19) Europäisches Patentamt
European Patent Office
Office européen des brevets

(11) EP 2 391 672 B2

(12) # NEUE EUROPÄISCHE PATENTSCHRIFT

Nach dem Einspruchsverfahren

(45) Veröffentlichungstag und Bekanntmachung des Hinweises auf die Entscheidung über den Einspruch:
**11.09.2024 Patentblatt 2024/37**

(45) Hinweis auf die Patenterteilung:
**19.12.2012 Patentblatt 2012/51**

(21) Anmeldenummer: **10700967.2**

(22) Anmeldetag: **06.01.2010**

(51) Internationale Patentklassifikation (IPC):
***C08J 7/04*** *(2020.01)* ***C23F 11/12*** *(2006.01)*
***C23F 11/173*** *(2006.01)*

(52) Gemeinsame Patentklassifikation (CPC):
(C-Sets verfügbar)
**B05D 1/286; B05D 7/54; C08F 259/02; C08F 287/00; C09J 7/10;** C09J 2433/00 (Forts.)

(86) Internationale Anmeldenummer:
**PCT/EP2010/050072**

(87) Internationale Veröffentlichungsnummer:
**WO 2010/086196 (05.08.2010 Gazette 2010/31)**

(54) **VERFAHREN ZUR KORROSIONSSCHUTZBEHANDLUNG VON METALLOBERFLÄCHEN**
METHOD FOR ANTICORROSIVE TREATMENT OF METAL SURFACES
PROCÉDÉ DE TRAITEMENT ANTICORROSION DE SURFACES MÉTALLIQUES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **29.01.2009 DE 102009006593**

(43) Veröffentlichungstag der Anmeldung:
**07.12.2011 Patentblatt 2011/49**

(73) Patentinhaber: **tesa SE**
**22848 Norderstedt (DE)**

(72) Erfinder:
- **PRENZEL, Alexander**
  **20259 Hamburg (DE)**
- **BESCHMANN, Jennifer**
  **20259 Hamburg (DE)**
- **SEIBERT, Matthias**
  **22529 Hamburg (DE)**

(74) Vertreter: **tesa SE**
**Hugo-Kirchberg-Straße 1**
**22848 Norderstedt (DE)**

(56) Entgegenhaltungen:
**EP-A2- 1 405 873**
**WO-A1-2010/084031**
**DE-A1- 102007 052 069**
**DE-A1- 4 006 355**

(52) Gemeinsame Patentklassifikation (CPC): (Forts.)

C-Sets
**C08F 259/02, C08F 220/14;**
**C08F 287/00, C08F 220/14**

## Beschreibung

Die vorliegende Erfindung betrifft ein Verfahren zur Korrosionsschutzbehandlung von Metalloberflächen mit den Merkmalen des Oberbegriffs von Anspruch 1.

Metallbauteile werden in vielfältigen Bereichen eingesetzt. Dabei werden sie den unterschiedlichsten Witterungsbedingungen ausgesetzt, so dass oftmals eine Korrosionsschutzbehandlung erforderlich ist. Hierzu sind insbesondere für einen vollflächigen Auftrag einer Korrosionsschutzschicht auf Metallbauteile verschiedene Verfahren bekannt. Die DE 10 2006 006 910 B3 offenbart beispielsweise ein Verfahren, bei dem auf die zu schützenden Metalloberflächen eine Korrosionsschutzschicht in Form einer Zinklammelenbeschichtung aufgebracht wird. Die Aufbringung der Zinklamellenbeschichtung erfolgt mittels eines Tauch- oder Sprühverfahrens. Bei einem weiteren aus dem Stand der Technik bekannten Verfahren erfolgt eine Korrosionsschutzbehandlung durch Eintauchen der Metalloberflächen in einen kathodisch abscheidbaren Elektrotauchlack (DE 10 2005 059 314 A1). Den beiden zuvor genannten Verfahren ist gemeinsam, dass die Korrosionsschutzschicht auf eine relativ große Fläche, insbesondere vollflächig, auf die zu behandelnde Metalloberfläche aufgebracht wird.

Insbesondere in der Automobilindustrie besteht jedoch die Notwendigkeit, auch kleine Flächen, nämlich die Oberfläche von Kanten und Übergängen von Metallbauteilen, vor Korrosion durch eine Korrosionsschutzschicht zu schützen. Hierzu wird in der Regel eine Feinnahtabdichtung manuell oder mittels eines Roboters aufgebracht. Als Material für die Feinnaht wird üblicherweise pumpbares PVC verwendet. Dieses wird lokal auf die Metalloberfläche aufgesprüht und anschließend mittels eines Pinsels glatt gestrichen. Bei diesem Verfahren, das grundsätzlich für Kanten und Übergänge geeignet ist, ist es schwierig, die Feinnaht in der im Fahrzeugbau erforderlichen optischen Güte zu erstellen. Vielmehr bleibt die Oberfläche oftmals rau und ein ungleichmäßiger Auftrag ist mit bloßem Auge erkennbar.

Der vorliegenden Erfindung liegt daher das Problem zugrunde, ein Verfahren zur Korrosionsschutzbehandlung von Metalloberflächen anzugeben, das ohne großen Aufwand durchführbar und insbesondere auch zum Schutz von Kanten und Übergängen von Metallbauteilen eingesetzt werden kann.

Das zuvor aufgezeigte Problem wird bei einem Verfahren zur Korrosionsschutzbehandlung von Metalloberflächen mit den Merkmalen des Oberbegriffs von Anspruch 1 durch die Merkmale des kennzeichnenden Teils von Anspruch 1 gelöst. Vorteilhafte Ausgestaltungen und Weiterbildungen sind Gegenstand der jeweiligen Unteransprüche.

Erfindungsgemäß wurde zunächst erkannt, dass selbstklebende Klebebänder bei entsprechender Behandlung eine gute Korrosionsschutzschicht auf Metalloberflächen ausbilden und demgemäß zur Korrosionsschutzbehandlung geeignet sind. Bei Versuchen konnte zudem gezeigt werden, dass mittels geeigneter selbstklebender Klebebänder glatte Oberflächen ausgebildet werden können. Derartige glatte Oberflächen weisen für einen Betrachter mit bloßem Auge eine gleichmäßige Oberflächenstruktur auf und sind dabei eben. Die Verwendung eines selbstklebenden Klebebandes zur Ausbildung einer Korrosionsschutzschicht auf Metalloberflächen ist wegen der einfachen Handhabung besonders vorteilhaft. Aufgrund der selbstklebenden Wirkung kann das Klebeband besonders einfach auf die Oberflächen aufgebracht und dort vor weiteren Prozessschritten vorfixiert werden. Auch ist ein derartiges Klebeband insbesondere zur Anwendung auf kleinen Flächen geeignet.

Bei dem erfindungsgemäßen Verfahren wird das selbstklebende Klebeband auf die jeweilige Metalloberfläche aufgebracht und anschließend erwärmt. Das selbstklebende Klebeband beinhaltet mindest eine Schicht, die durch Erwärmung aufschmilzt, sich also bei Erwärmung auf der Metalloberfläche verteilt und dabei eine geschlossene Korrosionsschutzschicht ausbildet. Dadurch, dass es sich um ein selbstklebendes Klebeband handelt, das letztendlich die Korrosionsschutzschicht bildet, kann der Auftrag sehr einfach, insbesondere auch an Kanten und Übergängen zwischen verschiedenen Metallbauteilen erfolgen. Die Klebrigkeit des Klebebandes ermöglicht eine Vorfixierung, bevor durch das Erwärmen die Korrosionsschutzschicht ausgebildet wird. Ferner kann das selbstklebende Klebeband auch auf kleinen Flächen gleichmäßig aufgebracht werden, was mit herkömmlichen Verfahren, wie zum Beispiel dem Aufsprühen von Lack, nur schwer und mittels weiterer Hilfsmittel, wie temporärer Schutzfolien, möglich ist.

Insbesondere hat sich gezeigt, dass bei Auswahl eines geeigneten selbstklebenden Klebebandes die Korrosionsschutzschicht mit einer im Wesentlichen glatten Oberfläche ausgebildet wird, das heißt, für einen Betrachter ist die Oberfläche der Korrosionsschutzschicht gleichmäßig und eben ausgebildet.

Das selbstklebende Klebeband beinhaltet mindestens eine Schicht auf Basis von Polyacrylaten und/oder Polymethacrylaten, welche an sich selbstklebend und/oder hitzeaktivierbar und somit zur Ausbildung der Korrosionsschutzschicht geeignet ist.

In einer weiteren bevorzugten Variante werden hitzeaktivierbare Haftklebemassen auf Poly(meth)acrylatbasis eingesetzt. Die hitzeaktivierbare Masse umfasst vorteilhaft ein Polymer, das

(a1) 70 bis 100 Gew.-% Acrylsäureester und/oder Methacrylsäureester und/oder deren freien Säuren mitder Formel

$$CH_2 = C(R1)(COOR2),$$

wobei R1 H und/oder $CH_3$ darstellt und R2 H und/oder Alkylketten mit 1 bis 30 C-Atomen darstellt; und (a2) 0 bis 30 Gew.-%

olefinisch ungesättigte Monomere mit funktionellen Gruppen umfasst, wobei sich die Gewichtsangaben auf das Polymer beziehen.

Vorzugsweise werden für die Monomere (a1) Acrylmomonere, umfassend Acryl- und Methacrylsäureester mit Alkylgruppen, bestehend aus 1 bis 14 C-Atomen, eingesetzt. Spezifische Beispiele, ohne sich durch diese Aufzählung einschränken zu wollen, sind Methylacrylat, Methylmethacrylat, Ethylacrylat, Ethylmethacrylat, Propylacrylat, Propylmethacrylat, n-Butylacrylat, n-Butylmethacrylat, n-Pentylacrylat, n-Hexylacrylat, n-Hexylmethacrylat, n-Heptylacrylat, n-Octylacrylat, n-Nonylacrylat, Laurylacrylat, Stearylacrylat, Stearylmethacrylat, Behenylacrylat, und deren verzweigten Isomere, wie zum Beispiel 2-Ethylhexylacrylat. Weitere einzusetzende Verbindungsklassen, die ebenfalls in geringen Mengen unter (a1) hinzugesetzt werden können, sind Cyclohexylmethacrylate, Isobornylacrylat und Isobornylmethacrylate.

Vorzugsweise werden für (a2) Acrylmonomere entsprechend der folgenden allgemeinen Formel

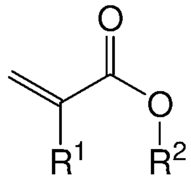

wobei $R^1$ H und/oder $CH_3$ darstellt und der Rest $-OR^2$ eine funktionelle Gruppe darstellt oder beinhaltet, welche eine nachfolgende thermische Vernetzung der Klebemasse unterstützt.

Besonders bevorzugte Beispiele für die Komponente (a2) sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Acrylamid und Glycidylmethacrylat, Benzylacrylat, Benzylmethacrylat, Phenylacrylat, Phenylmethacrylat, t-Butylphenylacrylat, t-Butylaphenylmethacrylat, Phenoxyethylacrlylat, Phenoxyethylmethacrylat, 2-Butoxyethylmethacrylat, 2-Butoxyethylacrylat, Dimethylaminoethylmethacrylat, Dimethylaminoethylacrylat, Diethylaminoethylmethacrylat, Diethylaminoethylacrylat, Cyanoethylmethacrylat, Cyanoethylacrylat, Gycerylmethacrylat, 6-Hydroxyhexylmethacrylat, N-tert.-Butylacrylamid, N-Methylolmethacrylamid, N-(Butoxymethyl)methacrylamid, N-Methylolacrylamid, N-(Ethoxymethyl)acrylamid, N-Isopropylacrylamid, Vinylessigsäure, Tetrahydrofufurylacrylat, β-Acryloyloxypropionsäure, Trichloracrylsäure, Fumarsäure, Crotonsäure, Aconitsäure, Dimethylacrylsäure, wobei diese Aufzählung nicht abschließend ist.

Ebenso bevorzugt werden für die Komponente (a2) aromatische Vinylverbindungen eingesetzt, wobei die aromatischen Kerne bevorzugt aus C4- bis C18-Bausteinen bestehen und auch Heteroatome enthalten können. Besonders bevorzugte Beispiele sind Styrol, 4-Vinylpyridin, N-Vinylphthalimid, Methylstyrol, 3,4-Dimethoxystyrol, 4-Vinylbenzoesäure, wobei diese Aufzählung nicht abschließend ist.

Zur Polymerisation werden die Monomere dermaßen gewählt, dass die resultierenden Polymere als hitzeaktivierbare Haftklebemassen eingesetzt werden können, insbesondere derart, dass die resultierenden Polymere haftklebende Eigenschaften entsprechend dem "Handbook of Pressure Sensitive Adhesive Technology" von Donatas Satas (van Nostrand, New York 1989) besitzen. Für diese Anwendungen liegt die statische Glasübergangstemperatur des resultierenden Polymers vorteilhaft oberhalb 30 °C.

Zur Erzielung einer Glasübergangstemperatur $T_{G,A}$ der Polymere von $T_{G,A}$ >= 30 °C werden entsprechend dem vorstehend gesagten die Monomere sehr bevorzugt derart ausgesucht und die mengenmäßige Zusammensetzung der Monomermischung vorteilhaft derart gewählt, dass sich nach der Fox-Gleichung (G1) (vgl. T.G. Fox, Bull. Am. Phys. Soc. 1956, 1, 123) der gewünschte $T_{G,A}$-Wert für das Polymer ergibt.

$$\frac{1}{T_G} = \sum_n \frac{W_n}{T_{G,n}} \qquad \text{(G1)}$$

Hierin repräsentiert n die Laufzahl über die eingesetzten Monomere, $W_n$ den Massenanteil des jeweiligen Monomers n (Gew.-%) und $T_{G,n}$ die jeweilige Glasübergangstemperatur des Homopolymers aus den jeweiligen Monomeren n in K.

Die unterschiedlichen Herstellverfahren (Polymerisationsverfahren) für derartige Polyacrylathaftklebemassen werden weiter unten beschrieben.

Für die Verankerung der hitzeaktivierbaren Polymere kann es von Vorteil sein, wenn das Polymer vor der Beschichtung mit Corona oder Plasma behandelt wird. Für die atmosphärische Plasmabehandlung eignen sich zum Beispiel Geräte der Firma Plasmatreat.

Weiterhin kann es für den Prozess und für die Verankerung der Schicht mit weiteren möglichen Schichte oder einer Folie auf Basis von Polyester, Polyamid, Polymethacrylat, PVC, etc. von Vorteil sein, wenn eine chemische

Verankerung zum Beispiel über einen Primer stattfindet.

Besonders bevorzugt wird eine Polyacrylathaftklebemasse eingesetzt, die ein Polymer umfasst, das in Bezug auf das Polymer

(b1) 70 bis 100 Gew.-% Acrylsäureester und/oder Methacrylsäureester und/oder deren freie Säuren mit der Formel

CH2 = CH(R3)(COOOR4),

wobei R3 H und/oder $CH_3$ und R4 H und/oder Alkylketten mit 1 bis 30 C-Atomen darstellt; und (b2) 0 bis 30 Gew.-% olefinisch ungesättigte Monomere mit funktionellen Gruppen umfasst, wobei sich die Gewichtsangaben auf das Polymer beziehen.

Vorzugsweise werden für die Monomere (b1) Acrylmomonere eingesetzt, die Acryl- und Methacrylsäureester mit Alkylgruppen, bestehend aus 4 bis 14 C-Atomen, bevorzugt 4 bis 9 C-Atomen, umfassen. Spezifische Beispiele, ohne sich durch diese Aufzählung einschränken zu wollen, sind n-Butylacrylat, n-Pentylacrylat, n-Hexylacrylat, n-Heptylacrylat, n-Octylacrylat, n-Nonylacrylat, Laurylacrylat, Stearylacrylat, Behenylacrylat, und deren verzweigten Isomere, wie zum Beispiel 2-Ethylhexylacrylat. Weitere einzusetzende Verbindungsklassen, die ebenfalls in geringen Mengen unter (b1) hinzugesetzt werden können sind Methylmethacrylate, Cyclohexylmethacrylate, Isobornylacrylat und Isobornylmethacrylate.

Stärker bevorzugt werden für die Monomere (b2) Vinylester, Vinylether, Vinylhalogenide, Vinylidenhalogenide, Vinylverbindungen mit aromatischen Cyclen und Heterocyclen in $\alpha$-Stellung eingesetzt. Auch hier seien einige nicht einschränkende Beispiele genannt: Vinylacetat, Vinylformamid, Vinylpyridin, Ethylvinylether, Vinylchlorid, Vinylidenchlorid und Acrylonitril. Besonders bevorzugt werden für die Monomere (b2) Monomere mit folgenden funktionellen Gruppen eingesetzt: Hydroxy-, Carboxy-, Epoxy-, Säureamid-, Isocyanato- oder Aminogruppen.

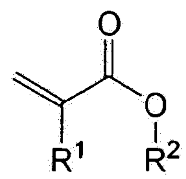

In einer vorteilhaften Variante werden für (b2) Acrylmonomere entsprechend der folgenden allgemeinen Formel eingesetzt,

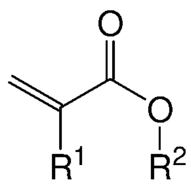

wobei $R^1$ H oder $CH_3$ darstellt und der Rest -$OR^2$ eine funktionelle Gruppe darstellt oder beinhaltet, welche eine nachfolgende thermische Vernetzung der Haftklebemasse ermöglicht.

Besonders bevorzugte Beispiele für die Komponente b2) sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Acrylamid und Glycidylmethacrylat, Benzylacrylat, Benzylmethacrylat, Phenylacrylat, Phenylmethacrylat, t-Butylphenylacrylat, t-Butylaphenylmethacrylat, Phenoxyethylacrlylat, Phenoxyethylmethacrylat, 2-Butoxyethylmethacrylat, 2-Butoxyethylacrylat, Dimethylaminoethylmethacrylat, Dimethylaminoethylacrylat, Diethylaminoethylmethacrylat, Diethylaminoethylacrylat, Cyanoethylmethacrylat, Cyanoethylacrylat, Gycerylmethacrylat, 6-Hydroxyhexylmethacrylat, N-tert.-Butylacrylamid, N-Methylolmethacrylamid, N-(Buthoxymethyl)methacrylamid, N-Methylolacrylamid, N-(Ethoxymethyl)acrylamid, N-Isopropylacrylamid, Vinylessigsäure, Tetrahydrofufurylacrlyat, $\beta$-Acryloyloxypropionsäure, Trichloracrylsäure, Fumarsäure, Crotonsäure, Aconitsäure, Dimethylacrylsäure, wobei diese Aufzählung nicht abschließend ist.

In einer weiteren bevorzugten Variante werden für die Komponente (b2) aromatische Vinylverbindungen eingesetzt, wobei bevorzugt die aromatischen Kerne aus C4 bis C18 bestehen und diese auch Heteroatome enthalten können. Besonders bevorzugte Beispiele sind Styrol, 4-Vinylpyridin, N-Vinylphthalimid, Methylstyrol, 3,4-Dimethoxystyrol, 4-Vinylbenzoesäure, wobei diese Aufzählung nicht abschließend ist.

Zur Polymerisation werden die Monomere wiederum dermaßen gewählt, dass die resultierenden Polymere als industriell verwendbare Haftklebemassen eingesetzt werden können, insbesondere derart, dass die resultierenden Polymere haftklebende Eigenschaften entsprechend dem "Handbook of Pressure Sensitive Adhesive Technology" von Donatas Satas (van Nostrand, New York 1989) besitzen. Auch hier kann die Steuerung der gewünschten Glasübergangstemperatur durch die Anwendung der Fox-Gleichung (G1) bei der Zusammenstellung der Monomermischung, welche der Polymerisation zugrunde liegt, erzielt werden. Für die Haftklebemasse der Schicht B liegt die statische Glasübergangstemperatur des resultierenden Polymers vorteilhaft unterhalb 15 °C. Zur Herstellung der Polyacrylathaftklebemassen werden vorteilhaft konventionelle radikalische Polymerisationen oder kontrollierte radikalische Polymerisationen durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich jedoch alle für Acrylate dem Fachmann geläufigen, üblichen Initiatoren. Die Produktion von C-zentrierten Radikalen ist im Houben-Weyl, Methoden der Organischen Chemie, Vol. E 19a, Seiten 60 bis 147, beschrieben. Diese Methoden werden in bevorzugter Weise in Analogie angewendet.

Beispiele für Radikalquellen sind Peroxide, Hydroperoxide und Azoverbindungen. Als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-tert-butylperoxid, Azodüsosäurebutyronitril, Cyclohexylsulfonylacetylperoxid, Düsopropylpercarbonat, tert-Butylperoktoat, Benzpinacol. Besonders bevorzugt wird als radikalischer Initiator 1,1'-Azo-bis-(cyclohexancarbonsäurenitril) (Vazo 88® der Firma DuPont) verwendet.

Die mittleren Molekulargewichte $M_n$ der bei der radikalischen Polymerisation entstehenden Haftklebemassen werden sehr bevorzugt derart gewählt, dass sie in einem Bereich von 20.000 bis 2.000.000 g/mol liegen; speziell für die weitere Verwendung als Schmelzhaftkleber werden Haftklebemassen mit mittleren Molekulargewichten $M_n$ von 100.000 bis 500.000 g/mol hergestellt. Die Bestimmung des mittleren Molekulargewichtes erfolgt über Größenausschlusschromatographie (SEC) oder matrix-unterstützte Laser-Desorption/Ionisations-Massenspektrometrie (MALDI-MS).

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind reine Alkane (zum Beispiel Hexan, Heptan, Octan, Isooctan), aromatische Kohlenwasserstoffe (zum Beispiel Benzol, Toluol, Xylol), Ester (zum Beispiel Essigsäureethylester, Essigsäurepropyl-, -butyl- oder -hexylester), halogenierte Kohlenwasserstoffe (zum Beispiel Chlorbenzol), Alkanole (zum Beispiel Methanol, Ethanol, Ethylenglycol, Ethylenglycolmonomethylether) und Ether (zum Beispiel Diethylether, Dibutylether) oder Gemische davon. Die wässrigen Polymerisationsreaktionen können mit einem mit Wasser mischbaren oder hydrophilen Colösungsmittel versetzt werden, um zu gewährleisten, dass das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethern, Glycolethern, Pyrrolidinen, N-Alkylpyrrolidinonen, N-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon.

Die Polymerisationszeit beträgt - je nach Umsatz und Temperatur - zwischen 4 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Initiatoren der Eintrag von Wärme essentiell. Die Polymerisation kann für die thermisch zerfallenden Initiatoren durch Erwärmen auf 50 bis 160 °C, je nach Initiatortyp, initiiert werden.

Zur Radikalstabilisierung werden in günstiger Vorgehensweise Nitroxide eingesetzt, wie zum Beispiel 2,2,5,5-Tetramethyl-1-pyrrolidinyloxyl (PROXYL), 3-Carbamoyl-PROXYL, 2,2-dimethyl-4,5-cyclohexyl-PROXYL, 3-oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL - 2,2,6,6-Tetramethyl-1-piperidinyloxyl pyrrolidinyloxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl - N-tert.-Butyl-1-phenyl-2-methylpropylnitroxid - N-tert.-Butyl-1-(2-naphtyl)-2-methylpropylnitroxid - N-tert.-Butyl-1-diethylphosphono-2,2-dimethylpropylnitroxid - N-tert.-Butyl-1-dibenzylphosphono-2,2-dimethylpropylnitroxid - N-(1-Phenyl-2-methyl propyl)-1-diethylphosphono-1-methylethylnitroxid - Di-t-Butylnitroxid - Diphenylnitroxid - t-Butyl-t-amylnitroxid.

Eine Reihe weiterer Polymerisationsmethoden, nach denen die Klebemassen in alternativer Vorgehensweise hergestellt werden können, lassen sich aus dem Stand der Technik wählen: US 4,581,429 A offenbart ein kontrolliert radikalisches Polymerisationsverfahren, das als Initiator eine Verbindung der Formel R'R"N-O-Y anwendet, worin Y eine freie radikalische Spezies ist, die ungesättigte Monomere polymerisieren kann. Die Reaktionen weisen aber im Allgemeinen geringe Umsätze auf. Besonders problematisch ist die Polymerisation von Acrylaten, die nur zu sehr geringen Ausbeuten und Molmassen abläuft. WO 98/13392 A1 beschreibt offenkettige Alkoxyaminverbindungen, die ein symmetrisches Substitutionsmuster aufweisen. EP 735 052 A1 offenbart ein Verfahren zur Herstellung thermoplastischer Elastomere mit engen Molmassenverteilungen. WO 96/24620 A1 beschreibt ein Polymerisationsverfahren, bei dem sehr spezielle Radikalverbindungen wie zum Beispiel phosphorhaltige Nitroxide, die auf Imidazolidin basieren, eingesetzt

werden. WO 98/44008 A1 offenbart spezielle Nitroxyle, die auf Morpholinen, Piperazinonen und Piperazindionen basieren. DE 199 49 352 A1 beschreibt heterocyclische Alkoxyamine als Regulatoren in kontrolliert radikalischen Polymerisationen. Entsprechende Weiterentwicklungen der Alkoxyamine bzw. der korrespondierenden freien Nitroxide verbessern die Effizienz zur Herstellung von Polyacrylaten (Hawker, Beitrag zur Hauptversammlung der American Chemical Society, Frühjahr 1997; Husemann, Beitrag zum IUPAC World-Polymer Meeting 1998, Gold Coast).

Als weitere kontrollierte Polymerisationsmethode lässt sich in vorteilhafter Weise zur Synthese von Blockcopolymeren die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (der EP 0 824 111 A1; der EP 826 698 A1; der EP 824 110 A1; der EP 841 346 A1; der EP 850 957 A1) eingesetzt werden. Die unterschiedlichen Möglichkeiten der ATRP sind ferner in den Schriften der US 5,945,491 A, der US 5,854,364 A und der US 5,789,487 A beschrieben.

Weiterhin kann das erfindungsgemäß verwendete Polymer vorteilhaft über eine anionische Polymerisation hergestellt werden. Hier werden als Reaktionsmedium bevorzugt inerte Lösungsmittel verwendet, wie zum Beispiel aliphatische und cycloaliphatische Kohlenwasserstoffe, oder auch aromatische Kohlenwasserstoffe.

Das lebende Polymer wird im Allgemeinen durch die Struktur PL(A)-Me repräsentiert, wobei Me ein Metall der Gruppe I des Periodensystems, wie zum Beispiel Lithium, Natrium oder Kalium, und PL(A) ein wachsender Polymerblock aus den Monomeren A ist. Die Molmasse des herzustellenden Polymers wird durch das Verhältnis von Initiatorkonzentration zu Monomerkonzentration vorgegeben.

Als geeignete Polymerisationsinitiatoren eignen sich zum Beispiel n-Propyllithium, n-Butyllithium, sec-Butyllithium, 2-Naphthyllithium, Cyclohexyllithium oder Octyllithium, wobei diese Aufzählung nicht den Anspruch auf Vollständigkeit besitzt. Ferner sind Initiatoren auf Basis von Samarium-Komplexen zur Polymerisation von Acrylaten bekannt (Macromolecules 1995, 28, 7886) und hier einsetzbar.

Weiterhin lassen sich auch difunktionelle Initiatoren einsetzen, wie beispielsweise 1,1,4,4-Tetraphenyl-1,4-dilithiobutan oder 1,1,4,4-Tetraphenyl-1,4-dilithioisobutan. Coinitiatoren lassen sich ebenfalls einsetzen. Geeignete Coinitiatoren sind unter anderem Lithiumhalogenide, Alkalimetallalkoxide oder Alkylaluminium-Verbindungen. In einer sehr bevorzugten Variante sind die Liganden und Coinitiatoren so gewählt, dass Acrylatmonomere, wie zum Beispiel n-Butylacrylat und 2-Ethylhexylacrylat, direkt polymerisiert werden können und nicht im Polymer durch eine Umesterung mit dem entsprechenden Alkohol generiert werden müssen.

Als sehr bevorzugter Herstellprozess wird eine Variante der RAFT-Polymerisation (reversible addition-fragmentation chain transfer polymerization) durchgeführt. Der Polymerisationsprozess ist zum Beispiel in den Schriften WO 98/01478 A1 und WO 99/31144 A1 ausführlich beschrieben. Zur Herstellung eignen sich besonders vorteilhaft Trithiocarbonate der allgemeinen Struktur R'''-S-C(S)-S-R''' (Macromolecules 2000, 33, 243-245).

In einer sehr vorteilhaften Variante werden beispielsweise die Trithiocarbonate (TTC1) und (TTC2) oder die Thioverbindungen (THI1) und (THI2) zur Polymerisation eingesetzt, wobei Φ ein Phenylring, der unfunktionalisiert oder durch Alkyl- oder Arylsubstituenten, die direkt oder über Ester- oder Etherbrücken verknüpft sind, funktionalisiert sein kann, eine Cyanogruppe oder ein gesättigter oder ungesättigter aliphatischer Rest sein kann. Der Phenylring Φ kann optional einen oder mehrere Polymerblöcke, beispielsweise Polybutadien, Polyisopren, Polychloropren oder Poly(meth) acrylat, das entsprechend der Definition für P(A) oder P(B) aufgebaut sein kann, oder Polystyrol tragen, um nur einige zu nennen. Funktionalisierungen können beispielsweise Halogene, Hydroxygruppen, Epoxidgruppen, stickstoff- oder schwefelenthaltende Gruppen sein, ohne dass diese Aufzählung Anspruch auf Vollständigkeit erhebt.

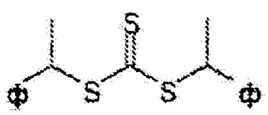

(TTC 1)

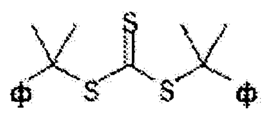

(TTC 2)

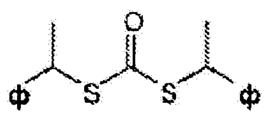

(THI 1)

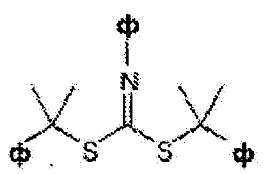

(THI 2)

In Verbindung mit den oben genannten kontrolliert radikalisch verlaufenden Polymerisationen werden Initiatorsysteme

bevorzugt, die zusätzlich weitere radikalische Initiatoren zur Polymerisation enthalten, insbesondere thermisch zerfallende radikalbildende Azo- oder Peroxoinitiatoren. Prinzipiell eignen sich hierfür jedoch alle für Acrylate bekannten üblichen Initiatoren. Die Produktion von C-zentrierten Radikalen ist im Houben-Weyl, Methoden der Organischen Chemie, Vol. E19a, S. 60ff, beschrieben. Diese Methoden werden in bevorzugter Weise angewendet. Beispiele für Radikalquellen sind Peroxide, Hydroperoxide und Azoverbindungen. Als einige nicht ausschließliche Beispiele für typische Radikalinitiatoren seinen hier genannt: Kaliumperoxodisulfat, Dibenzoylperoxid, Cumolhydroperoxid, Cyclohexanonperoxid, Cyclohexylsulfonylacetylperoxid, Di-tert-butylperoxid, Azodiisobutyronitril, Diisopropylpercarbonat, tert-Butylperoctoat, Benzpinacol. In einer sehr bevorzugten Variante wird als radikalischer Initiator 1,1'-Azo-bis-(cyclohexylnitril) (Vazo 88®, DuPont®) oder 2,2-Azo-bis-(2-methylbutannitril) (Vazo 67®, DuPont®) verwendet. Weiterhin können auch Radikalquellen verwendet werden, die erst unter UV-Bestrahlung Radikale freisetzen.

Beim konventionellen RAFT-Prozess wird zumeist nur bis zu geringen Umsätzen polymerisiert (WO 98/01478 A1), um möglichst enge Molekulargewichtsverteilungen zu realisieren. Durch die geringen Umsätze lassen sich diese Polymere aber nicht als Haftklebemassen und insbesondere nicht als Schmelzhaftkleber einsetzen, da der hohe Anteil an Restmonomeren die klebtechnischen Eigenschaften negativ beeinflusst, die Restmonomere im Aufkonzentrationsprozess das Lösemittelrecyclat verunreinigen und die entsprechenden Selbstklebebänder ein sehr hohes Ausgasungsverhalten zeigen würden.

Den Haftklebemassen werden Harze beigemischt. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie $C_5$-, $C_9$- sowie andere Kohlenwasserstoffharze. Beliebige Kombinationen dieser und weiterer Harze können eingesetzt werden, um die Eigenschaften der resultierenden Klebmasse wunschgemäß einzustellen. Im Allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

Weiterhin können optional Weichmacher (Plastifizierungsmittel), Füllstoffe (zum Beispiel Fasern, Russ, Zinkoxid, Titandioxid, Kreide, Voll- oder Hohlglaskugeln, Mikrokugeln aus anderen Materialien, Kieselsäure, Silikate), Keimbildner, Blähmittel, Compoundierungsmittel und/oder Alterungsschutzmittel, zum Beispiel in Form von primären und sekundären Antioxidantien oder in Form von Lichtschutzmitteln zugesetzt werden.

Die innere Festigkeit (Kohäsion) der Haftklebemasse wird durch eine Vernetzung gesteigert. Hierzu werden den acrylathaltigen Haftklebemassen verträgliche Vernetzersubstanzen zugesetzt werden.

Die Vernetzung erfolgt als thermische Vernetzung während des Aufschmelzens der Polyacrylatschicht des selbstklebenden Klebebandes, welche selbstklebend sein kann und/oder wärmeaktivierbar ist. Durch die Vernetzung wird die selbstklebende Masse deutlich weniger empfindlich gegenüber hohen Temperaturen, so dass die selbstklebende Masse dann nicht mehr Aufschmelzen kann. Insbesondere die Vernetzung ermöglicht somit den Einsatz von selbstklebenden Klebebändern, die an sich aufgrund ihrer mangelnden Temperaturstabilität nicht als produktives, also dauerhaft verbleibendes Bauteil eingesetzt werden könnten.

Überraschend und dem Fachmann nicht offensichtlich wurde gefunden, dass die Kombination aus einem multifunktionellen Epoxid und einem Urethan und/oder Harnstofferivats als Vernetzer für die Polyacrylatschicht in dem selbstklebenden Klebeband hinsichtlich der Lagerungsstabilität, der Verarbeitbarkeit sowie der erwünschten Vernetzung beim Aufschmelzen das zuvor beschriebene Problem sehr gut löst. Besonders geeignet sind Harnstoffderivate, die mindestens zwei Harnstofffunktionalitäten aufweisen sowie bei der Aufschmelztemperatur oder im Bereich der Aufschmelztemperatur thermisch sich zersetzen, wobei ein Isocyanat und ein Amin freigesetzt werden. Das Amin, welches als Blockierungsmittel für das Isocynat fungiert, besitzt überraschenderweise auch die Fähigkeit als Beschleuniger für die Epoxidvernetzung zu wirken, ohne den das Epoxid mit dem Polyacrylat nicht reagiert. Unterhalb der Aufschmelztemperatur ist das selbstklebende Klebeband mit der Polyacrylatschicht lagerungsstabil und es findet keine Vernetzungsreaktion statt.

Ein Beispiel für solche Harnstoffderivate ist das Dyhard® UR 500 von EVONIK.

Als epoxidgruppenhaltige Substanzen werden insbesondere multifunktionelle Epoxide eingesetzt, also solche, die mindestens zwei Epoxideinheiten pro Molekül aufweisen (also mindestens bifunktional sind). Dies können sowohl aromatische als auch aliphatische Verbindungen sein.

Hervorragend geeignete multifunktionelle Epoxide sind Oligomere des Epichlorhydrins, Epoxyether mehrwertiger Alkohole [insbesondere Ethylen-, Propylen-, und Butylenglycole, Polyglycole, Thiodiglycole, Glycerin, Pentaerythrit, Sorbit, Polyvinylalkohol, Polyallylalkohol und ähnliche], Epoxyether mehrwertiger Phenole [insbesondere Resorcin, Hydrochinon, Bis-(4-hydroxyphenyl)-methan, Bis-(4-hydroxy-3-methylphenyl)-methan, Bis-(4-hydroxy-3,5-dibromphenyl)-methan, Bis-(4-hydroxy-3,5-difluorphenyl)-methan, 1,1-Bis-(4-hydroxyphenyl)ethan, 2,2-Bis-(4-hydroxyphenyl)propan, 2,2-Bis-(4-hydroxy-3-methylphenyl)-propan, 2,2-Bis-(4-hydroxy-3-chlorphenyl)-propan, 2,2-Bis-(4-hydroxy-3,5-dichlorphenyl)-propan, 2,2-Bis-(4-hydroxy-3,5-dichlorphenyl) propan, Bis-(4-hydroxyphenyl)-phenylmethan, Bis-(4-hydroxyphenyl)-phenylmethan, Bis-(4-hydroxyphenyl)diphenylmethan, Bis (4-hydroxyphenyl)-4-methylphenylmethan, 1,1-Bis-(4-hydroxyphenyl)-2,2,2-trichlorethan, Bis-(4-hydroxyphenyl)-(4-chlorphenyl)-methan, 1,1-Bis-(4-hydroxyphenyl)-cyclohexan, Bis-(4-hydroxyphenyl)-cyclohexylmethan, 4,4'-Dihydroxydiphenyl, 2,2'-Dihydroxydiphenyl, 4,4'-Dihydroxydiphenylsulfon] sowie deren Hydroxyethylether, Phenol-Formaldehyd-Kondensationsprodukte, wie Phenolalkohole, Phenolaldehydharze und ähnliche, S- und N-haltige Epoxide (zum Beispiel N,N-Diglycidylanillin, N,N'-Dimethyldiglycidyl-4,4-Diaminodiphenylmethan) sowie Epoxide, welche nach üblichen Verfahren aus mehrfach ungesättigten Carbonsäuren oder einfach ungesättigten Carbonsäureresten ungesättigter Alkohole hergestellt worden sind, Glycidylester, Polyglycidylester, die durch Polymerisation oder Mischpolymerisation von Glycidylestern ungesättigter Säuren gewonnen werden können oder aus anderen sauren Verbindungen (Cyanursäure, Diglycidylsulfid, cyclischem Trimethylentrisulfon bzw. deren Derivaten und anderen) erhältlich sind.
Sehr geeignete Ether sind beispielsweise 1,4-Butandioldiglycidether, Polyglycerol-3-Glycidether, Cyclohexan-dimethanoldiglycidether, Glycerintriglycidether, Neopentylglykoldiglycidether, Pentaerythrittetraglycidether, 1,6-Hexandioldiglycidylether), Polypropylenglykoldiglycidether, Trimethylolpropantriglycidether, Bisphenol-A-Diglycidetherund Bisphenol-F-Diglycidether.

Ebenfalls hervorragend geeignet sind epoxidierte, mindestens bifunktionelle Cyclohexenderivate, wie zum Beispiel UVACURE® 1500 von CYTEC 3,4-Epoxycyclohexylmethyl-3,4-epoxycyclohexancarboxylat und Bis-3,4-epoxycyclohexylmethyladipat.

Im Falle einer rein hitzeaktivierbaren Polyacrylatschicht kann die Haftklebrigkeit der selbstklebenden Masse optional durch thermische Aktivierung oder durch Lösemittelaktivierung erzeugt werden. Besonders bevorzugt sind selbstklebende Polyacrylate oder die Beschichtung der rein hitzeaktivierbaren Polyacrylatschicht mit einer Haftklebemasse, besonders bevorzugt einer Polyacrylathaftklebemasse, wobei hier alle dem Fachmann geläufigen Arten von Haftklebemassen verwendet werden können, die gegebenenfalls mittels eines Primers oder einer physikalischen Vorbehandlung auf der rein hitzeaktivierbaren Polyacrylatschicht verankert werden.

Das Klebeband ist für Transport, Lagerung oder Stanzung vorzugsweise mindestens einseitig mit einem Liner versehen, also zum Beispiel einer silikonbeschichteten Folie oder einem Silikonpapier.

Eine weitere vorteilhafte Ausführung der Erfindung ist die Verwendung einer trägerfreien Klebemasse für das selbstklebende Klebeband. Als trägerfreie Klebemasse wird eine Klebemasse bezeichnet, die keinen dauerhaften Träger, wie eine Polymerfolie oder ein Vlies, aufweist. Vielmehr ist die selbstklebende Masse in bevorzugter Ausgestaltung lediglich auf einen Liner, also ein Material, das lediglich vorübergehend zur Stützung und leichteren Auftragbarkeit der selbstklebenden Masse dient, aufgebracht. Nach dem Aufbringen der selbstklebenden Masse auf die Metalloberfläche, wird der Liner dann entfernt. Im Gegensatz zur Schicht, in diesem Falle die selbstklebende Masse, stellt der Liner somit kein produktives Bauteil dar. Die dann zurückbleibende trägerfreie Klebemasse kann besonders einfach aufgeschmolzen werden, ohne dass dabei Beeinträchtigungen durch ein Trägermaterial zu erwarten sind.

Die Herstellung der Schicht kann aus Lösung sowie aus der Schmelze erfolgen. Für den letzteren Fall umfassen geeignete Herstellprozesse sowohl Batchverfahren als auch kontinuierliche Verfahren. Besonders bevorzugt ist die kontinuierliche Fertigung mit Hilfe eines Extruders und anschließender Beschichtung direkt auf einem Liner mit oder ohne Klebmasseschicht.

Zur Optimierung der Haftung zwischen der Schicht und gegebenenfalls nachfolgender Plastisol- oder Lackschicht kann diese modifiziert sein. Beispiele hierfür sind physikalische Behandlungen mit Coronaentladung oder Plasma, Beschichtung mit haftvermittelnden Substanzen wie hydriertem Nitrilkautschuk, Vinylidenchloridpolymer oder solchen Haftvermittlern wie sie dem Fachmann für die Grundierung von Kunststoffteilen aus Polyolefinen (zum Beispiel Automobilstoßfänger) für nachfolgende Lackierungen bekannte sind. Weiterhin kann die Oberfläche zu diesem Zweck auch mit einer Folie wie zum Beispiel Acrylnitril-Butadien-Styrol-Copolymer (ABS), Caprolactam, Cellophan, Ethylen-Vinylacetat-Copolymer (EVA), Kapton, Polyester (PEN, PET), Polyolefin (PE, PP, etc), Polyarclat (PMMA, etc), Polyamid, Polyimid, Polystyrol, Polyvinylchlorid oder Polyurethan sein.

Weiterhin ist in manchen Fällen eine Barriereschicht sinnvoll um Migration von Weichmacher aus der Plastisolschicht in die Korrosionsschutzschicht oder Migration von Weichmacher aus der Korrosionsschutzschicht in eine Lackschicht zu vermeiden. Zusätzlich kann diese Schicht zu einer verbesserten Lackierbarkeit führen, sowie als Barriere gegen im Lackierprozess aus den Fugen austretende Gase dienen. Dies kann zum Beispiel eine Beschichtung mit Vinylidenchloridpolymer oder Aufbringung einer Folie wie zum Beispiel Acrylnitril-Butadien-Styrol-Copolymer (ABS), Caprolactam, Cellophan, Ethylen-Vinylacetat-Copolymer (EVA), Kapton, Polyester (PEN, PET), Polyolefin (PE, PP, etc), Polyacrylat (PMMA, etc), Polyamid, Polyimid, Polystyrol, Polyvinylchlorid oder Polyurethan sein.

Das Aufschmelzen der Schicht sowie der Start der thermischen Vernetzung durch die Deblockierung des Vernetzers sowie die Freisetzung der Beschleuniger sollte erst bei mindestens 90 °C, vorzugsweise bei mindestens 110°C, weiter vorzugsweise bei mindestens 130 °C erfolgen. Die jeweils erforderliche Mindesttemperatur wird durch die konkrete Zusammensetzung der selbstklebenden Masse bestimmt. Diese Temperatur sollte einerseits möglichst hoch

gewählt sein, damit die selbstklebende Masse möglichst lagerstabil ist, zum anderen sollte die Temperatur jedoch nicht zu hoch sein, um das Aufschmelzen sowie die Vernetzung möglichst energieoptimiert durchführbar ist und auch weitere, beispielsweise in einer Kraftfahrzeugkarosserie eingesetzte Bauteile nicht übermäßig hohen Temperaturen ausgesetzt werden. Als Maximaltemperatur hat sich insofern eine Temperatur von maximal 200 °C, vorzugsweise von maximal 180 °C, weiter vorzugsweise von maximal 160 °C für das Aufschmelzen der selbstklebenden Masse herausgestellt.

Die Schicht sollte mit einer Schichtdicke von mindestens 50 µm, vorzugsweise von mindestens 100 µm, weiter vorzugsweise von mindestens 200 µm auf die Metalloberfläche aufgebracht werden. Zudem sollte die Schichtdicke maximal 750 µm, vorzugsweise maximal 600 µm, weiter vorzugsweise maximal 400 µm betragen. Durch die Wahl einer derartigen Schichtdicke wird sichergestellt, dass einerseits die Metalloberfläche beim Aufschmelzen sowie Vernetzen der selbstklebenden Masse ausreichend bedeckt wird, andererseits die Schichtdicke der Korrosionsschutzschicht nicht zu groß wird.

Insbesondere im Bereich der Automobilindustrie ist es oftmals notwendig, Korrosionsschutzschichten manuell, also von Hand, auf die Metalloberfläche aufzubringen. Dies erfolgt vorliegend, indem das selbstklebende Klebeband manuell auf die Metalloberfläche aufgebracht wird und anschließend ein entsprechender Wärmeprozess durchlaufen wird. Von besonderer Bedeutung ist in diesem Fall, dass das selbstklebende Klebeband gesundheitsunbedenklich ist, für den Werker also keine Gesundheitsgefährdung beim Handling des Klebebandes besteht. Für das Handling sind somit insbesondere auch keine weiteren Schutzmaßnahmen, wie Atemschutz, gesicherte und/oder gekühlte Lagerung oder dergleichen erforderlich.

Zur Anwendung hat es sich als besonders geeignet herausgestellt, wenn die selbstklebende Masse zunächst auf einer Rolle aufgewickelt und von dieser Rolle auf die Metalloberfläche aufgebracht wird. Der Werker kann die selbstklebende Masse dann je nach Bedarf ablängen. Um das Aufwickeln der selbstklebenden Masse auf eine Rolle zu ermöglichen, ist diese üblicherweise auf einer Seite mit einem Liner bedeckt. Durch den Liner wird ein leichtes Abrollen der selbstklebenden Masse von der Rolle ermöglicht und dadurch das Handling erleichtert.

Auch die Darreichung in Form von Stanzteilen kann für bestimmte Anwendungen von Vorteil sein. Hierzu werden die gewünschten Formen aus dem Klebeband gestanzt und üblicherweise auf einem Liner aufgebracht. Dieser Aufbau kann dann entweder zu einer Rolle oder zu einzelnen Blättern verarbeitet werden. Dabei spielt es keine Rolle ob verschiedene oder gleichartig geformte Stanzteile auf einem Liner zusammengefasst werden.

Gegenstand der vorliegenden Erfindung ist ein Verfahren zur Korrosionsschutzbehandlung von Metalloberflächen, bei dem auf die Metalloberfläche ein selbstklebendes Klebeband aufgebracht wird und das selbstklebende Klebeband mindestens eine Schicht mit einer Masse enthält, die derart erwärmt wird, dass die Masse auf die Metalloberfläche aufgeschmolzen und so eine Korrosionsschutzschicht bildet. Die selbstklebende Masse ist insbesondere gemäß den zuvor beschriebenen Merkmalen ausgebildet und ausgewählt. Darüber hinaus sollte die Klebmasse nach dem Aufschmelzen eine möglichst hohe Temperaturbeständigkeit aufweisen, um möglichst vielfältige Einsatzgebiete der korrosionsschutzbehandelten Metalloberflächen zu ermöglichen. Insbesondere ist vorgesehen, dass die Klebmasse nach dem Aufschmelzen bis zu -5 °C, vorzugsweise bis zu -15 °C, weiter vorzugsweise bis zu -30 °C temperaturbeständig ist. Zudem sollte die Klebmasse nach dem Aufschmelzen auch bis zu 70 °C, vorzugsweise bis zu 80 °C, weiter vorzugsweise bis zu 100 °C temperaturbeständig sein.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Im Folgenden wird die Erfindung anhand eines Beispiels näher erläutert, ohne die Erfindung damit zu beschränken.

**Beispiel 1**

Es wurde ein Polyacrylat (3 Gew.-% Acrylsäure, 45 Gew.-% Butylacrylat und 52 Gew.-% 2-Ethylhexylacrylat, $M_n$ = 514.000 glmol mittels GPC gemessen) mit 30 Gew.-% Terpen-Phenolharz als Klebharz Dertophene DT110 (bezogen aufs Polymer) von DRT Resins, Frankreich, sowie der Vernetzerkombination 1 Gew.-% Dyhard® UR 500 und 0,8 Gew.-% Polypox R16 von UPPC AG (bezogen aufs Polymer) als selbstklebende Masse formuliert und mit einer Dicke von 300 µm über die Kante von zwei KTL-Metallblechen geklebt.

Anschließend wurden diese Bleche zusammen mit der selbstklebenden Masse für 40 Minuten auf ca. 140 °C erwärmt. Die Erwärmung führte zum Aufschmelzen der selbstklebenden Masse auf die Metalloberfläche sowie zur Initiierung der Vernetzung der selbstklebenden Masse, sodass sich eine Korrosionsschutzschicht ausbildete. Nach Abkühlen der Metallbleche zeigte die Korrosionsschutzschicht eine glatte Oberfläche. Dabei blieb die Blechkante zwischen den beiden Metallblechen zwar erkennbar, die Oberfläche der ursprünglichen Polyacrylatmasse war jedoch glatt und wies keine unmittelbar sichtbaren Beeinträchtigungen auf.

Anschließend wurden die Metallbleche unterschiedlichen Umgebungsbedingungen ausgesetzt. Die Temperatur wurde hierzu abwechselnd zwischen ca. -5 °C und 70 °C variiert. Die Elastizität der ursprünglichen Polyacrylatmasse

blieb dabei weitgehend erhalten, wodurch die Gefahr des Abplatzens der Korrosionsschutzschicht vermindert ist.

Zudem wurde noch ein Lackierversuch vorgenommen, der zeigte, dass die Polyacrylatmasse nach dem Aufschmelzen unmittelbar lackiert werden konnte.

## Patentansprüche

1. Verfahren zur Korrosionsschutzbehandlung von Metalloberflächen, insbesondere an Kanten und Übergängen der Metallbauteile,
**dadurch gekennzeichnet, dass**

    auf die Metalloberfläche ein selbstklebendes Klebeband aufgebracht wird und das selbstklebende Klebeband mindestens eine Schicht mit einer Masse enthält, die derart erwärmt wird, dass die Masse auf die Metalloberfläche aufgeschmolzen und so eine Korrosionsschutzschicht bildet,
    wobei als Masse der mindestens einen Schicht des selbstklebenden Klebebandes als Haftklebemasse eine Polyacrylatmasse mit einem Klebharze als Hauptkomponente aufweisenden Klebrigmacher verwendet wird,
    wobei die Polyacrylatmasse vernetzt wird und zur Vernetzung der Polyacrylatmasse eine Kombination aus einem multifunktionellen Epoxids und einem Urethan- und/oder Harnstoffderivats verwendet wird.

2. Verfahren nach Anspruch 1,
**dadurch gekennzeichnet, dass**
das selbstklebende Klebeband beim Aufschmelzen eine im Wesentlichen glatte Oberfläche ausbildet.

3. Verfahren nach zumindest einem der vorhergehenden Ansprüche,
**dadurch gekennzeichnet, dass**
die Polyacrylatmasse bei mindestens 90 °C, vorzugsweise bei mindestens 110 °C, weiter vorzugsweise bei mindestens 130 °C aufgeschmolzen wird.

4. Verfahren nach zumindest einem der vorhergehenden Ansprüche,
**dadurch gekennzeichnet, dass**
die Polyacrylatmasse bei mindestens 90 °C, vorzugsweise bei mindestens 110 °C, weiter vorzugsweise bei mindestens 130 °C vernetzt wird.

5. Verfahren nach zumindest einem der vorhergehenden Ansprüche,
**dadurch gekennzeichnet, dass**
die Polyacrylatmasse bei maximal 200 °C, vorzugsweise bei maximal 180 °C, weiter vorzugsweise bei maximal 160 °C aufgeschmolzen wird.

6. Verfahren nach zumindest einem der vorhergehenden Ansprüche,
**dadurch gekennzeichnet, dass**
als selbstklebendes Klebeband mit der mindestens einen Polyacrylatschicht ein trägerfreies Klebeband verwendet wird.

7. Verfahren nach zumindest einem der vorhergehenden Ansprüche,
**dadurch gekennzeichnet, dass**
die Polyacrylatschicht des selbstklebenden Klebebandes mit einer Schichtdicke von mindestens 50 $\mu$m, vorzugsweise von mindestens 100 $\mu$m, weiter vorzugsweise von mindestens 200 $\mu$m und/oder von höchstens 750 $\mu$m, vorzugsweise von höchstens 600 $\mu$m, weiter vorzugsweise von höchstens 400 $\mu$m aufgebracht wird.

8. Verfahren nach zumindest einem der vorhergehenden Ansprüche,
**dadurch gekennzeichnet, dass**

    nach dem Aufschmelzen und Vernetzen die Korrosionsschutzschicht selbst lackiert wird oder
    auf die Korrosionsschutzschicht eine weitere lackierbare Schicht aufgebracht wird und diese anschließend lackiert wird.

9. Verfahren nach zumindest einem der vorhergehenden Ansprüche,
**dadurch gekennzeichnet, dass**

das selbstklebende Klebeband manuell auf die Metalloberfläche aufgebracht wird.

**10.** Verfahren nach zumindest einem der vorhergehenden Ansprüche,
**dadurch gekennzeichnet, dass**
als Polyacrylatschicht des selbstklebenden Klebebandes eine gesundheitsunbedenkliche Polyacrylatmasse sowie ein gesundheitsunbedenklicher Vernetzer oder eine gesundheitsunbedenkliche Kombination aus Vernetzern auf die Metalloberfläche aufgebracht wird.

**11.** Verfahren nach zumindest einem der vorhergehenden Ansprüche,
**dadurch gekennzeichnet, dass**
das selbstklebende Klebeband von einer Rolle auf die Metalloberfläche aufgebracht und nach Bedarf abgelängt wird.

**12.** Verfahren nach zumindest einem der vorhergehenden Ansprüche,
**dadurch gekennzeichnet, dass**
das selbstklebende Klebeband nach dem Aufschmelzen bis zu -5 °C, vorzugsweise bis zu -15 °C, weiter vorzugsweise bis zu -30 °C temperaturbeständig ist.

**13.** Verfahren nach zumindest einem der vorhergehenden Ansprüche,
**dadurch gekennzeichnet, dass**
das selbstklebende Klebeband nach dem Aufschmelzen bis zu 70 °C, vorzugsweise bis zu 80 °C, weiter vorzugsweise bis zu 100 °C temperaturbeständig ist.

## Claims

**1.** Method for the corrosion control treatment of metal surfaces, especially at edges and transitions of the metal components,
**characterized in that**

a self-adhesive tape is applied to the metal surface, and the self-adhesive tape comprises at least one layer with a material which is heated such that the material melts onto the metal surface and so forms a corrosion control layer, wherein a polyacrylate material with a tackifier having tackifying resins as principal component is used as material of the at least one layer of the self-adhesive tape, as pressure-sensitive adhesive,
wherein the polyacrylate material is crosslinked and a combination of a polyfunctional epoxide and a urethane derivative and/or urea derivative is used for crosslinking the polyacrylate material.

**2.** Method according to Claim 1,
**characterized in that**
the self-adhesive tape on melting forms a substantially smooth surface.

**3.** Method according to at least one of the preceding claims,
**characterized in that**
the polyacrylate material is melted at not less than 90°C, preferably at not less than 110°C, more preferably at not less than 130°C.

**4.** Method according to at least one of the preceding claims,
**characterized in that**
the polyacrylate material is crosslinked at not less than 90°C, preferably at not less than 110°C, more preferably at not less than 130°C.

**5.** Method according to at least one of the preceding claims,
**characterized in that**
the polyacrylate material is melted at not more than 200°C, preferably at not more than 180°C, more preferably at not more than 160°C.

**6.** Method according to at least one of the preceding claims,
**characterized in that**
a carrier-free adhesive tape is used as self-adhesive tape with the at least one polyacrylate layer.

7. Method according to at least one of the preceding claims,
**characterized in that**
the polyacrylate layer of the self-adhesive tape is applied with a layer thickness of at least 50 μm, preferably of at least 100 μm, more preferably of at least 200 μm and/or of not more than 750 μm, preferably of not more than 600 μm, more preferably of not more than 400 μm.

8. Method according to at least one of the preceding claims,
**characterized in that**

after melting and crosslinking have taken place, the corrosion control layer itself is painted or
a further, paintable layer is applied to the corrosion control layer, and this further layer is subsequently painted.

9. Method according to at least one of the preceding claims,
**characterized in that**
the self-adhesive tape is applied manually to the metal surface.

10. Method according to at least one of the preceding claims,
**characterized in that**
as polyacrylate layer of the self-adhesive tape a polyacrylate material which is benign in health terms and also a crosslinker which is benign in health terms or a combination of crosslinkers which is benign in health terms are applied to the metal surface.

11. Method according to at least one of the preceding claims,
**characterized in that**
the self-adhesive tape is applied to the metal surface from a roll and separated off in the required length.

12. Method according to at least one of the preceding claims,
**characterized in that**
the self-adhesive tape, after melting has taken place, is temperature-resistant to - 5°C, preferably to -15°C, more preferably to -30°C.

13. Method according to at least one of the preceding claims,
**characterized in that**
the self-adhesive tape, after melting has taken place, is temperature-resistant to 70°C, preferably to 80°C, more preferably to 100°C.

**Revendications**

1. Procédé pour le traitement anticorrosion de surfaces métalliques, en particulier au niveau d'arêtes et de jonctions des pièces métalliques de construction,
**caractérisé en ce qu'**on applique sur la surface métallique un ruban adhésif autoadhésif et le ruban adhésif autoadhésif contient au moins une couche comportant une masse, qui est chauffée de sorte que la masse soit fondue sur la surface métallique et forme ainsi une couche anticorrosion,

une masse de polyacrylate comportant un agent d'adhésivité présentant des résines adhésives en tant que composant principal étant utilisée en tant que masse de l'au moins une couche du ruban adhésif autoadhésif, en tant que masse autoadhésive,
la masse de polyacrylate étant réticulée et, pour la réticulation de la masse de polyacrylate, une combinaison d'un époxyde multifonctionnel et d'un dérivé d'uréthane et/ou d'urée étant utilisée.

2. Procédé selon la revendication 1,
**caractérisé en ce que** le ruban adhésif autoadhésif forme lors de la fusion une surface essentiellement lisse.

3. Procédé selon au moins l'une quelconque des revendications précédentes,
**caractérisé en ce qu'**on fait fondre la masse de polyacrylate à une température d'au moins 90 °C, de préférence à au moins 110 °C, encore mieux à au moins 130 °C.

**4.** Procédé selon au moins l'une quelconque des revendications précédentes, **caractérisé en ce qu'**on réticule la masse de polyacrylate à une température d'au moins 90 °C, de préférence à au moins 110 °C, encore mieux à au moins 130 °C.

**5.** Procédé selon au moins l'une quelconque des revendications précédentes, **caractérisé en ce qu'**on fait fondre la masse de polyacrylate à une température d'au maximum 200 °C, de préférence à au maximum 180 °C, encore mieux à au maximum 160 °C.

**6.** Procédé selon au moins l'une quelconque des revendications précédentes, **caractérisé en ce qu'**on utilise comme ruban adhésif autoadhésif comportant ladite au moins une couche de polyacrylate un ruban adhésif exempt de support.

**7.** Procédé selon au moins l'une quelconque des revendications précédentes, **caractérisé en ce qu'**on applique la couche de polyacrylate du ruban adhésif autoadhésif en une épaisseur de couche d'au moins 50 μm, de préférence d'au moins 100 μm, encore mieux d'au moins 200 μm et/ou d'au maximum 750 μm, de préférence d'au maximum 600 μm, encore mieux d'au maximum 400 μm.

**8.** Procédé selon au moins l'une quelconque des revendications précédentes,

**caractérisé en ce qu'**après la fusion et la réticulation on peint la couche anticorrosion ou
on applique sur la couche anticorrosion une autre couche susceptible d'être peinte et ensuite on peint cette dernière.

**9.** Procédé selon au moins l'une quelconque des revendications précédentes, **caractérisé en ce qu'**on applique manuellement le ruban adhésif autoadhésif sur la surface métallique.

**10.** Procédé selon au moins l'une quelconque des revendications précédentes, **caractérisé en ce qu'**en tant que couche de polyacrylate du ruban adhésif autoadhésif on applique sur la surface métallique une masse de polyacrylate sans inconvénient pour la santé ainsi qu'un agent de réticulation sans inconvénient pour la santé ou une combinaison sans inconvénient pour la santé d'agents de réticulation.

**11.** Procédé selon au moins l'une quelconque des revendications précédentes, **caractérisé en ce qu'**on applique sur la surface métallique le ruban adhésif autoadhésif à partir d'un rouleau et au besoin on le coupe à longueur voulue.

**12.** Procédé selon au moins l'une quelconque des revendications précédentes, **caractérisé en ce qu'**après la fusion le ruban adhésif autoadhésif est résistant en température jusqu'à une température de -5 °C, de préférence jusqu'à -15 °C, encore mieux jusqu'à -30 °C.

**13.** Procédé selon au moins l'une quelconque des revendications précédentes, **caractérisé en ce qu'**après la fusion le ruban adhésif autoadhésif est résistant en température jusqu'à une température de 70 °C, de préférence jusqu'à 80 °C, encore mieux jusqu'à 100 °C.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102006006910 B3
- DE 102005059314 A1
- US 4581429 A
- WO 9813392 A1
- EP 735052 A1
- WO 9624620 A1
- WO 9844008 A1
- DE 19949352 A1
- EP 0824111 A1
- EP 826698 A1
- EP 824110 A1
- EP 841346 A1
- EP 850957 A1
- US 5945491 A
- US 5854364 A
- US 5789487 A
- WO 9801478 A1
- WO 9931144 A1


### In der Beschreibung aufgeführte Nicht-Patentliteratur


- **T.G. FOX**. *Bull. Am. Phys. Soc*, 1956, vol. 1, 123
- **VON DONATAS SATAS**. Handbook of Pressure Sensitive Adhesive Technology. van Nostrand, 1989
- **HOUBEN-WEYL**. *Methoden der Organischen Chemie*, vol. 19a, 60-147
- *Macromolecules*, 1995, vol. 28, 7886
- *Macromolecules*, 2000, vol. 33, 243-245